(19) Europäisches Patentamt

European Patent Office

Office européen des brevets

(11) Numéro de publication: **0 304 349**
**B1**

# (12) FASCICULE DE BREVET EUROPEEN

(45) Date de publication du fascicule du brevet:
27.06.90

(51) Int. Cl.⁵: **F16F 13/00**

(21) Numéro de dépôt: **88401841.7**

(22) Date de dépôt: **15.07.88**

(54) **Articulation hydro-élastique, notamment pour la suspension d'un moteur de véhicule automobile.**

(30) Priorité: **21.07.87 FR 8710304**

(43) Date de publication de la demande:
**22.02.89 Bulletin 89/8**

(45) Mention de la délivrance du brevet:
**27.06.90 Bulletin 90/26**

(84) Etats contractants désignés:
**DE ES FR GB IT SE**

(56) Documents cités:
EP-A- 0 149 080
EP-A- 0 213 324
US-A- 4 679 777

PATENT ABSTRACTS OF JAPAN,
vol. 9, no. 268 (M-424)[1991], 25 octobre 1985; &
JP-A-60 113 836 (TOYOTA JIDOSHA K.K.) 20-06-1985
PATENT ABSTRACTS OF JAPAN,
vol. 10, no. 227 (M-505)[2283], 7 août 1986; &
JP-A-61 62 631 (KINUGAWA RUBBER IND. CO.
LTD)31-03-1986

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Le Fol, Marcel, 12 impasse du Verger Domloup, F-35410 Chateaugiron(FR)**
Inventeur: **Poupard, Dominique, 6 rue du Lac, F-92370 Chaville(FR)**

(74) Mandataire: **Kohn, Philippe et al, c/o CABINET LAVOIX 2, place d'Estienne d'Orves, F-75441 Paris Cédex 09(FR)**

## Description

La présente invention a pour objet une articulation élastique du type comprenant une armature intérieure et une armature extérieure reliées par une masse en élastomère dans laquelle sont ménagées deux chambres remplies de liquide et reliées par un conduit de liaison de grande longueur et de faible section de façon que la fréquence de résonance de la masse de liquide en mouvement dans le canal coïncide sensiblement avec la fréquence de résonance d'un organe dont on désire assurer l'amortissement tel que par exemple un moteur à combustion interne d'un véhicule automobile.

L'invention a plus particulièrement pour objet une articulation élastique du type comportant une armature intérieure et une armature extérieure reliées par une masse en élastomère dans laquelle sont ménagées deux chambres remplies de liquide et reliées entre elles par un premier conduit de liaison et un second conduit de liaison des deux chambres et des moyens d'obturation permettant d'interrompre la circulation du liquide dans le second conduit de liaison lorsque l'amplitude du déplacement relatif entre les deux armatures est supérieure à une valeur prédéterminée.

Le document JP-A-60-113836 décrit et représente une articulation de ce type dans laquelle les moyens d'obturation, constitués par un corps de clapet monté flottant dans une fenêtre, constituent un dispositif de découplage qui autorise un transfert de liquide d'un volume déterminé entre les deux chambres, correspondant à l'amplitude des vibrations que l'on désire filtrer entre les armatures.

La structure de l'articulation décrite dans ce document est particulièrement complexe et nécessite notamment de prévoir un empilement de plusieurs plaques qui sont coûteuses à réaliser et dont l'assemblage est délicat à réaliser avec précision en grande série.

De plus, cette conception ne permet pas d'assurer une position médiane d'équilibre du corps de clapet flottant.

Afin de remédier à ces inconvénients, l'invention propose une articulation élastique du type de cette décrite et représentée dans le document JP-A-60-113836, caractérisée en ce que les moyens d'obturation comportent au moins une membrane élastique fixée à l'une de ses extrémités, disposée sensiblement perpendiculairement à la direction d'écoulement du liquide à l'intérieur du second conduit et qui est susceptible de se déformer, sous l'action du liquide, pour obturer au moins un orifice de passage de ce dernier.

La membrane élastique peut par exemple être disposée avec jeu dans une chambre intermédiaire, formée à l'une des extrémités du second conduit, à l'intérieur de laquelle elle est susceptible de se déformer pour venir obturer alternativement au moins un orifice de passage prévu dans chacune de deux parois en vis-à-vis de la chambre intermédiaire.

Ce mode de réalisation, ainsi que d'autres modes de réalisation ou variantes utilisant une ou plusieurs membranes élastiques déformables, est particulièrement avantageux lorsque l'articulation est formée de deux pièces constituées chacune par une partie de l'armature intérieure et une partie de la masse en élastomère ménageant des alvéoles démoulables axialement, l'une des pièces comprenant en outre l'armature extérieure tandis que l'autre pièce comprend une armature secondaire, les armatures extérieure et secondaire étant serties l'une sur l'autre après serrage axial des deux pièces, et lorsque le second conduit de liaison entre les chambres, formées par les alvéoles, est ménagé entre les armatures secondaire et extérieure. Il est en effet alors particulièrement avantageux de réaliser la, ou les, membranes élastiques en matériau élastomère et venue de matière avec ladite masse en élastomère.

Le rapport de la longueur par le diamètre du premier conduit est supérieur au rapport de la longueur par le diamètre du second conduit. Le premier conduit a une longueur qui est environ 5 à 50 fois supérieure à son diamètre tandis que le second conduit a une longueur qui est inférieure à environ 10 fois son diamètre.

D'autres avantages et caractéristiques de différents modes de réalisation de l'invention apparaîtront à la lecture de la description détaillée qui va suivre pour la compréhension de laquelle on se reportera aux dessins annexés dans lesquels :

- La figure 1 est une vue en coupe axiale, selon la ligne 1-1 de la figure 2, d'une représentation permettant d'exposer le principe de fonctionnement d'une articulation à deux canaux à découplage ;

- la figure 2 est une vue en coupe selon la ligne 2-2 de la figure 1 ;

- la figure 3 est une demi-vue en coupe axiale selon la ligne 3-3 de la figure 2 ;

- la figure 4 est une vue en coupe, selon la ligne 4-4 de la figure 5, d'un premier mode de réalisation d'une articulation élastique selon l'invention ;

- la figure 5 est une vue en coupe axiale selon la ligne 5-5 de la figure 4 ;

- la figure 6 est une section, selon la ligne 6-6 de la figure 7, d'un second mode de réalisation de l'articulation élastique selon l'invention ;

- la figure 7 est une section selon la ligne 7-7 de la figure 6 ;

- la figure 8 est une section partielle selon la ligne 8-8 de la figure 6 ;

- la figure 9 est une vue en coupe, selon la ligne 9-9 de la figure 10, d'un troisième mode de réalisation d'une articulation selon l'invention ;

- la figure 10 est une vue en coupe axiale selon la ligne 10-10 de la figure 9 ;

- la figure 11 est une vue en coupe, selon la ligne 11-11 de la figure 12, d'un quatrième mode de réalisation d'une articulation selon l'invention ;

- la figure 12 est une vue en coupe axiale selon la ligne 12-12 de la figure 11 ;

- la figure 13 est une vue en coupe, selon la ligne 13-13 de la figure 14, d'un cinquième mode de réalisation de l'invention ;

- la figure 14 est une vue en coupe axiale selon la ligne 14-14 de la figure 13 ; et

- la figure 15 est une vue à plus grande échelle du détail de la figure 14 entouré par un cercle en trait mixte.

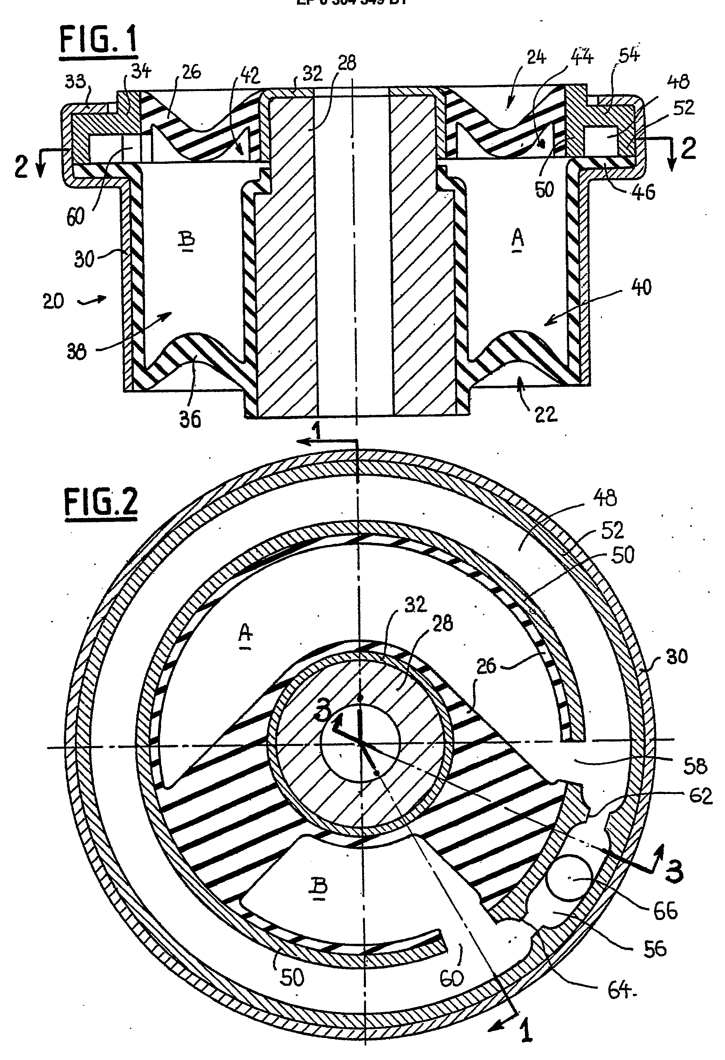

L'articulation élastique 20 représentée aux figures 1 à 3 est formée par l'assemblage d'une pièce inférieure 22 et d'une pièce supérieure 24.

La pièce 24 comprend un bloc en élastomère 26 qui relie une armature intérieure 28 à une armature extérieure 30 par l'intermédiaire, d'une part, d'un capuchon cylindrique en tôle 32, monté à force sur l'armature intérieure 28, auquel le bloc est fixé par adhérisation et, d'autre part, d'une armature secondaire métallique 34, qui est fixée à l'armature extérieure 30 par sertissage du bord extrême supérieure plié 33 de celle-ci, et à laquelle le bloc est également fixé par adhérisation.

La pièce 22 comprend essentiellement un bloc en élastomère inférieur 36 fixé par adhérisation à la paroi cylindrique externe de l'armature intérieure 28 ainsi qu'à la paroi cylindrique interne de l'armature extérieure 30. Deux alvéoles 38 et 40, démoulant axialement, sont ménagés dans le bloc élastomère 36 pour définir, en coopération avec le bloc en élastomère 26 deux chambres A et B remplies d'un liquide. Les deux chambres A et B sont délimitées à leurs parties supérieures par deux alvéoles, démoulant axialement, 42 et 44 du bloc en élastomère supérieur 26.

Le bloc en élastomère inférieur 36 comporte un bord supérieur 46 s'étendant dans un plan perpendiculaire à l'axe et qui coopère avec l'armature intermédiaire 34 pour assurer l'étanchéité des chambres A et B grâce au sertissage du bord 33 de l'armature extérieure cylindrique 30 lorsque les armatures extérieures 30 et secondaires 34 sont serties l'une de l'autre après serrage axial des deux pièces 22 et 24.

Les deux chambres A et B sont reliées entre elles par un premier conduit de liaison circulaire périphérique 48 qui est constitué par une empreinte de section sensiblement carrée formée dans la face inférieure de l'armature secondaire 34. Le premier conduit de liaison 48 est fermé à sa partie inférieure par le bord périphérique radial 46 du second bloc en élastomère 36 qui coopère avec les bords libres des deux parois verticales cylindriques et parallèles 50 et 52 de l'armature intermédiaire 34 qui délimitent latéralement le premier conduit de liaison 48. Les deux parois cylindriques parallèles 50 et 52 sont reliées entre elles à leur partie supérieure par une portion annulaire plane 54 de l'armature secondaire 34, qui s'étend dans un plan radial de l'articulation élastique.

Conformément au principe de fonctionnement de ce type d'articulation, les deux chambres A et B sont reliées entre elles par un second conduit de liaison 56.

Le second conduit de liaison 56 est un conduit dont la section est sensiblement circulaire. Comme le premier conduit de liaison 48, le second conduit de liaison 56 est un conduit périphérique circulaire qui prolonge le premier conduit de liaison 48 au voisinage des extrémités 58 et 60 de ce dernier qui débouchent dans les chambres A et B. Le second conduit de liaison 56 est constitué pour moitié par une empreinte formée dans la face inférieure de l'armature secondaire 34 et dont la section est semi-circulaire, et pour son autre moitié par une demi-empreinte de profil semi-circulaire complémentaire formé dans un prolongement axial du bord périphérique radial 46 du bloc en élastomère supérieur 36. Les deux extrémités 62 et 64 du second conduit de liaison 56 sont des orifices circulaires de diamètre réduit par rapport au diamètre interne du second conduit de liaison 56.

L'articulation 20 comporte des moyens d'obturation 66 permettant d'interrompre alternativement la circulation du liquide dans le second conduit de liaison 56 lorsque l'amplitude de déplacement relatif entre les deux armatures intérieure 28 et extérieure 30 est supérieure à une valeur prédéterminée.

Pour la compréhension du fonctionnement, les moyens d'obturation 66 ont été représentés sous forme d'une bille sphérique dont le diamètre est sensiblement égal au diamètre interne du second conduit de liaison 56 à l'intérieur duquel elle est reçue avec un jeu très faible et elle est susceptible de se déplacer pour venir coopérer alternativement avec chacune des deux extrémités de diamètre réduit 62 et 64, qui forment des sièges de valves, pour interrompre la circulation du liquide à l'intérieur du second conduit de liaison 56.

Les deux chambres A et B sont donc reliées par deux conduits de liaison 48 et 56. Le premier conduit de liaison 48 est un conduit long, c'est-à-dire dont la longueur est environ 5 à 50 fois supérieure à son diamètre, tandis que le second conduit 56 est un conduit court, c'est-à-dire dont la longueur est inférieure à environ 10 fois son diamètre, le rapport de la longueur par son diamètre du premier conduit de liaison 48 étant choisi supérieur au rapport de la longueur par son diamètre du second conduit de liaison 56.

La colonne périphérique de liquide contenue dans le premier conduit de liaison 48 a pour rôle d'amortir les vibrations à basses fréquences. La bille 66 peut se déplacer avec la colonne de liquide contenue à l'intérieur du second conduit de liaison et dont la section peut être différente de celle de la colonne contenue dans le premier conduit long 48. Le jeu radial entre la bille 66 et le conduit de liaison 56 est réduit au minimum afin de minimiser les fuites de liquide autour de la bille 66. La bille, qui a une fonction de valve anti-retour, se déplace alternativement entre les orifices d'extrémité 62 et 64 suivant une course correspondant au volume de liquide déplacé par le piston formé par l'armature intérieure 28 et l'armature extérieure 30 reliées par les masses d'élastomère 26 et 36.

Le dispositif de découplage, situé sur le trajet du second conduit de liaison 56, constitué par la bille d'obturation 66 n'autorise qu'un transfert d'un volume de liquide déterminé entre les deux chambres A et B, qui correspond à l'amplitude des vibrations que l'on souhaite filtrer.

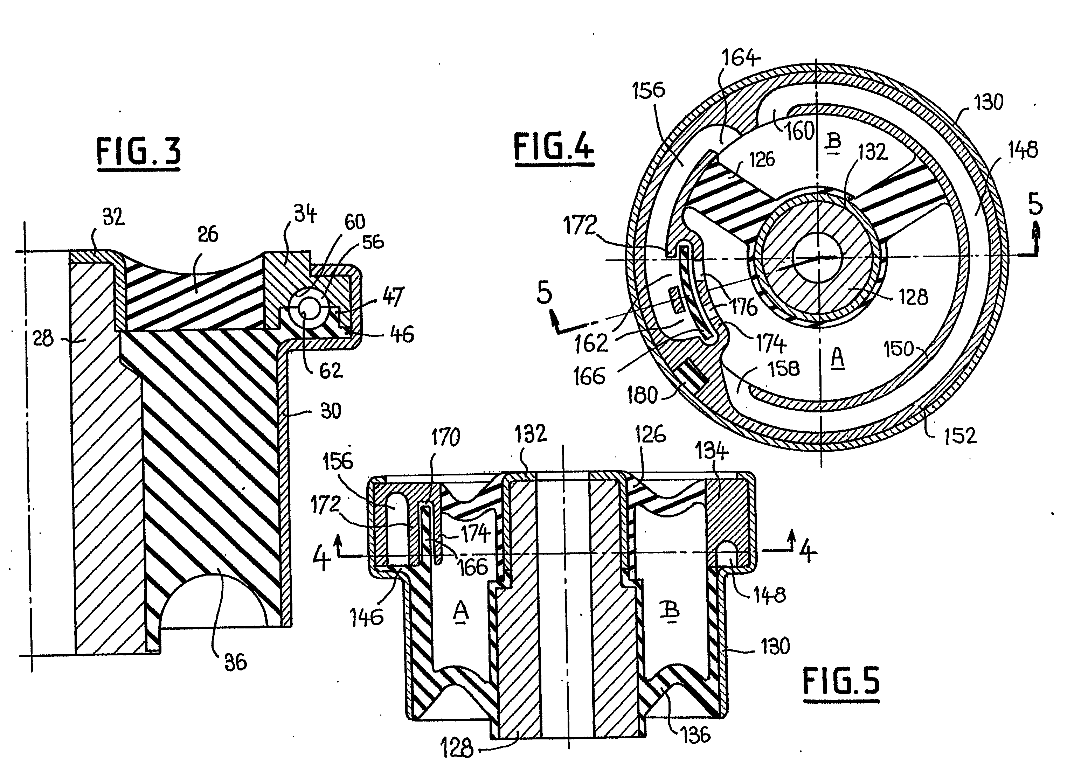

Dans la description qui va suivre des modes de réalisation de l'invention représentés aux figures 4 à 5, les éléments identiques ou similaires à ceux de l'articulation représentée aux figures 1 à 3, sont désignés par les mêmes chiffres de référence augmentés à chaque fois de 100.

Dans le premier mode de réalisation préféré représenté aux figures 4 et 5, les moyens d'obturation 166 sont formé d'une membrane élastique, réalisée en un matériau élastomère, venue de matière avec le bloc élastomère inférieur 136. La membrane élastique 166 est fixée à sa partie inférieure au bloc élastomère 136 au voisinage du bord périphérique radial 146 de ce dernier. Elle s'étend verticalement selon une direction sensiblement perpendiculaire à la direction d'écoulement du liquide circulant à l'intérieur du second conduit à l'intérieur duquel elle va permettre d'interrompre la circulation du liquide. La membrane élastique 166 est susceptible de se déformer sous l'action de l'effort de pression exercé par le liquide circulant entre les chambres A et B à l'intérieur du second conduit 156.

La membrane élastique 166 possède, en section radiale, un profil incurvé et est disposée avec jeu dans une chambre intermédiaire 170 qui est formée à l'extrémité 162 du second conduit de liaison 156 entre ce dernier et la chambre A. La chambre intermédiaire 170 est formée dans l'armature secondaire 134 et est délimitée par deux parois incurvées 172 et 174 qui s'étendent parallèlement et en vis-à-vis l'une de l'autre. La membrane élastique d'obturation 166 est susceptible de se déformer à l'intérieur de la chambre intermédiaire 170 pour venir obturer alternativement, soit les orifices de passage 162 formés dans la paroi incurvée extérieure 172 qui constituent l'orifice d'extrémité du second conduit de liaison 156, soit deux orifices de passage 176 formés dans la paroi incurvée intérieure 174 qui mettent en communication la chambre A et la chambre intermédiaire 170.

En l'absence de forces de pression provoquées par des vibrations à amortir qui provoquent un écoulement de liquide entre les chambres A et B par le second conduit de liaison 156, la membrane élastique d'obturation 166 est maintenue élastiquement dans une position centrée à l'intérieur de la chambre intermédiaire 170 c'est-à-dire par rapport aux deux surfaces incurvées 172 et 174 avec lesquelles elle est susceptible de coopérer.

Le positionnement relatif de la membrane élastique 166 par rapport à la chambre intermédiaire 170 est assuré au moyen d'un ergot 180 de positionnement angulaire de l'armature extérieure 130 par rapport à l'armature secondaire 134.

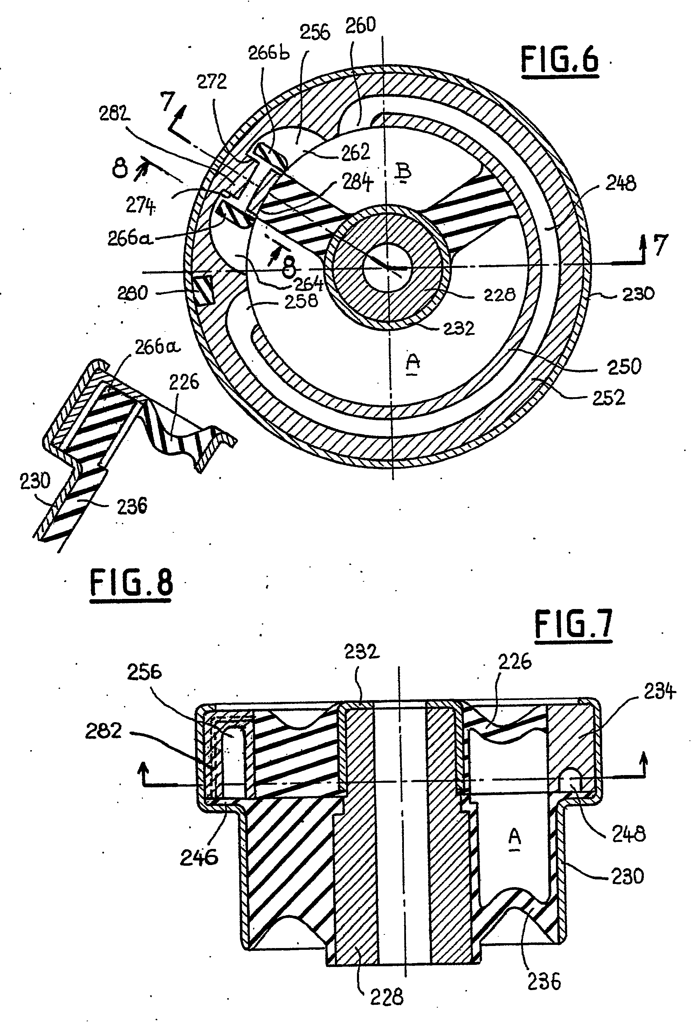

Dans le second mode de réalisation de l'invention représenté aux figures 6 à 8, les moyens d'obturation du second conduit de liaison 256 sont constitués par deux membranes élastiques 266a et 266b. Les deux membranes élastiques s'étendent à l'intérieur du second conduit 256, chacune d'elles étant susceptible de se déformer alternativement pour venir coopérer avec une surface complémentaire en vis-à-vis, respectivement 274 et 272, pour interrompre la circulation du liquide à l'intérieur du second conduit 256. Les deux faces parallèles en vis-à-vis 274 et 272 sont formées sur un épaulement radial interne en forme de U renversé 282 du second conduit de liaison 256. Les deux membranes élastiques 266a et 266b s'étendent parallèlement entre elles selon une direction sensiblement radiale, à l'intérieur du second conduit de liaison 256. En l'absence de sollicitations, les deux membranes élastiques occupent leur position représentée aux figures dans laquelle il existe un jeu périphérique autour des deux membranes et de l'épaulement 282 afin de permettre la circulation du liquide à l'intérieur du second conduit 256. Les deux membranes élastiques 266a et 266b sont réalisées en matériau élastomère et sont venues de matière avec le bloc en matériau élastomère inférieur 236.

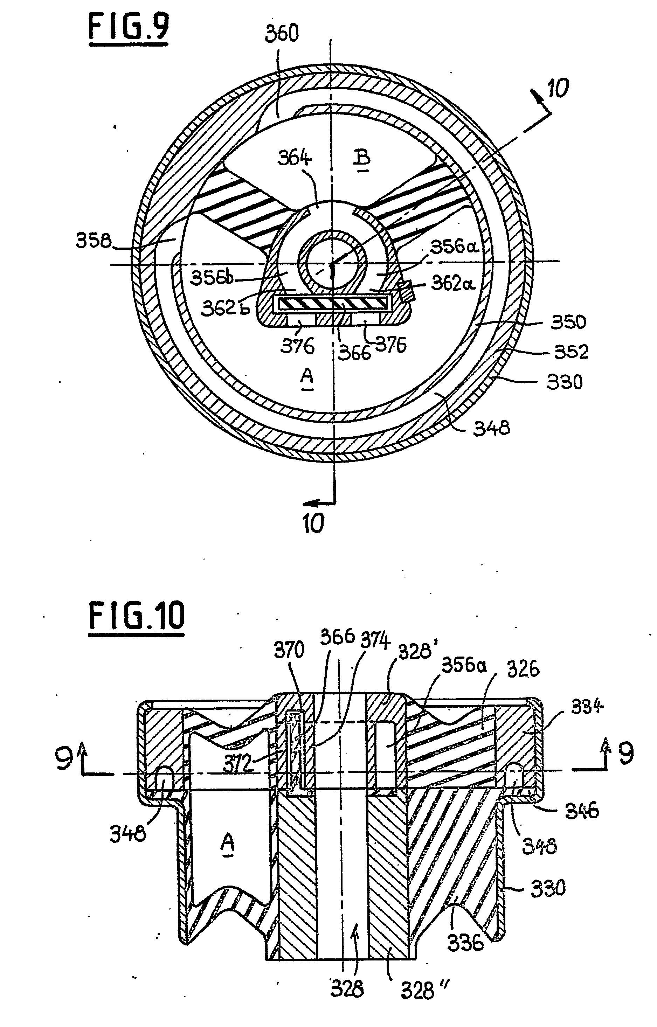

Dans le troisième mode de réalisation, représenté aux figures 9 et 10, le second conduit de liaison est constitué de deux conduits de liaison 356a et 356b reliant, en parallèle, les deux chambres A et B. Les deux conduits de liaison 356a et 356b, formant un second conduit de liaison double 356, sont ménagés dans une moitié supérieure 328' qui forme, avec une moitié inférieure 328" l'armature intérieure 328 de l'articulation élastique. Chacun des deux conduits 356a et 356b débouche par une extrémité, 362a et 362b respectivement, dans la paroi intérieure 374 de la chambre intermédiaire 370 agencée entre la chambre A et le second conduit de liaison double 356. La chambre intermédiaire 370 est également délimitée par une face plane parallèle 372, disposée en vis-à-vis de la face 374, dans laquelle sont ménagés deux orifices de passage 376 qui mettent en communication la chambre intermédiaire 370 avec la chambre A. De la même manière que dans le premier mode de réalisation représenté aux figures 4 et 5, l'élément d'obturation est constitué par une membrane élastique sensiblement plane 366 qui est disposée avec jeu et de manière centrée à l'intérieur de la chambre intermédiaire 370. Dans le cas d'un conduit de liaison court constitué par un conduit double 356a, 356b, le canal équivalent est un canal de même longueur mais dont la section est égale à la somme des deux conduits 356a et 356b. La paroi élastique déformable 366 est attachée uniquement à l'armature intérieure 328" et est enserrée axialement par la partie 328'.

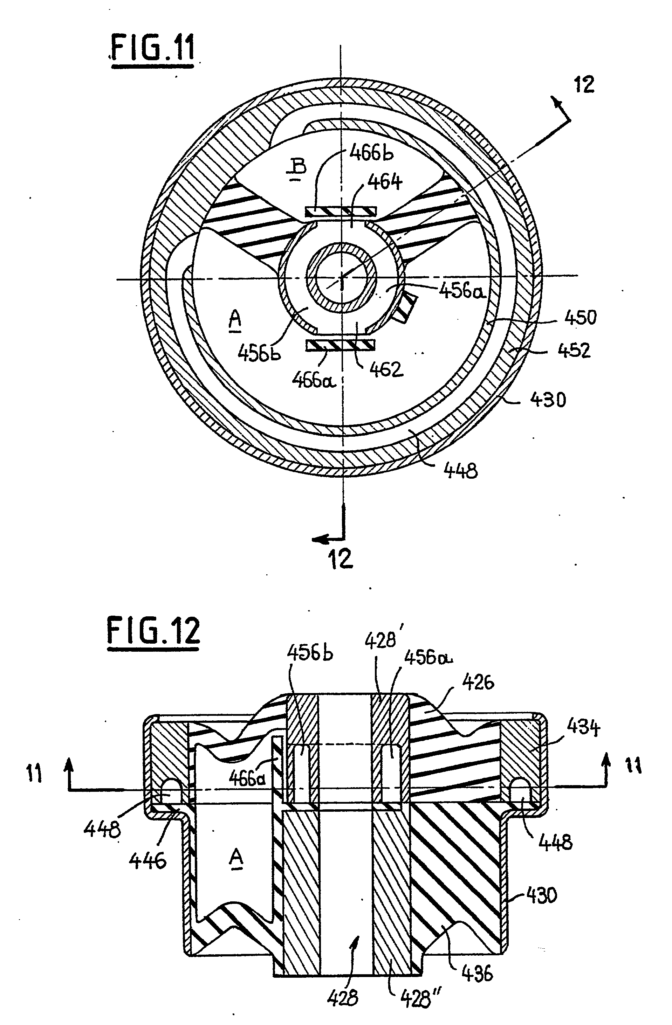

Dans le quatrième mode de réalisation, représenté aux figures 11 et 12, le second conduit de liaison est formé, comme dans le cas du troisième mode de réalisation représenté aux figures 9 et 10, d'un conduit double constitué de deux conduits 456a et 456b formés dans la partie supérieure 428' de l'armature intérieure 428. Les deux conduits 456a et 456b relient, en parallèle, les deux chambres A et B dans chacune desquelles ils débouchent par un orifice commun, respectivement 462 et 464. Les moyens d'obturation des orifices 462 et 464 sont formés par deux membranes élastiques déformables 466a et 466b. Chacune de ces deux membranes élastiques coopère avec un des deux orifices communs 462, 464 en vis-à-vis duquel elle est disposée avec jeu. Chaque membrane s'étend sensiblement perpendiculairement à la direction d'écoulement du liquide à travers cet orifice commun. Chacune des deux membranes 466a et 466b est susceptible de se déformer alternativement pour venir obturer l'orifice commun situé en vis-à-vis. Selon ce mode de réalisation, les deux membranes élastiques sont réalisées en matériau élastomère et venues de matière avec le bloc élastomère inférieur 436. Dans la position de repos représentée aux figures 11 et 12 chacune des membranes s'étend parallèlement à la surface plane dans laquelle débouche l'orifice commun en vis-à-vis et à une distance prédéterminée de celle-ci assurant ainsi un jeu pour le libre passage du liquide à travers le second conduit de liaison.

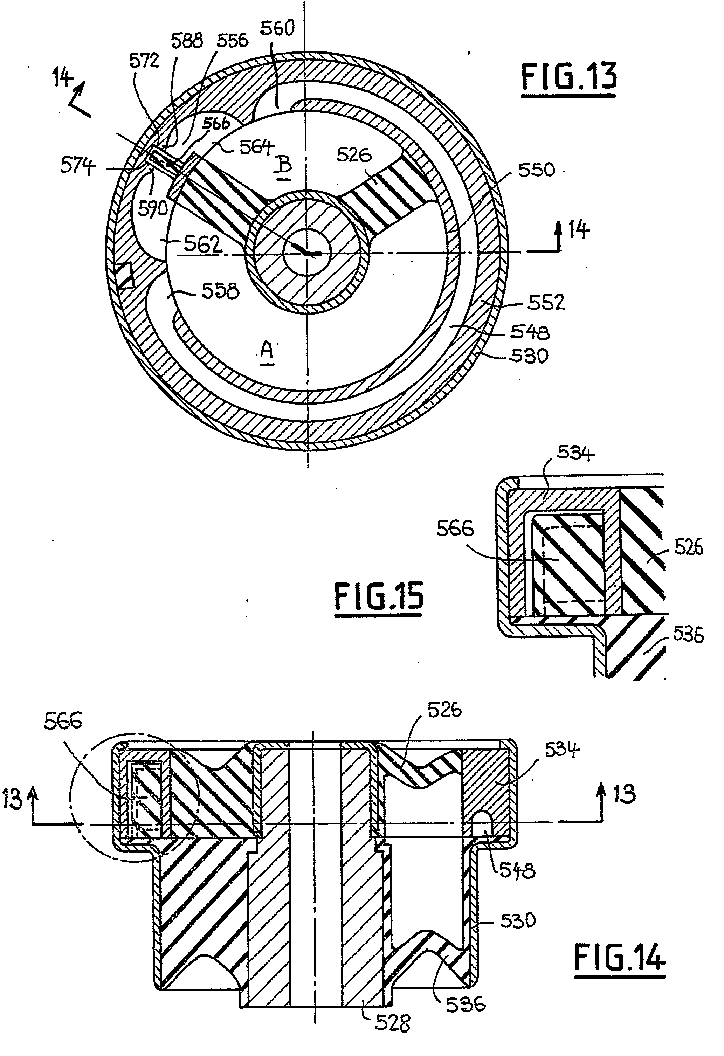

Dans le cinquième mode de réalisation, représenté aux figures 13 à 15, les moyens d'obturation sont constitués par une membrane élastique 566 qui est disposée à l'intérieur du second conduit de liaison 556 et qui est reçue avec jeu entre les faces en vis-à-vis 572 et 574 de deux épaulements internes 588 et 590 du second conduit de liaison 556. Dans sa position de repos, la membrane élastique s'étend dans un plan sensiblement radial et de manière centrée entre les deux faces parallèles en vis-à-vis 572 et 574. La membrane élastique 566 en matériau élastomère est fixée par adhérisation à l'armature intermédiaire 534.

**Revendications**

1. Articulation élastique du type comportant une armature intérieure (128, 228, 328, 428, 528) et une armature extérieure (130, 230, 330, 430, 530) reliées par une masse en élastomère (126, 226, 326, 426, 526 - 136, 236, 336, 436, 536) dans laquelle sont ménagées deux chambres (A, B) remplies de liquide et reliées entre elles par un premier conduit de liaison (148, 248, 348, 448, 548) et un second conduit de liaison (156, 256, 356, 456, 556), et des moyens d'obturation permettant d'interrompre la circulation du liquide dans le second conduit de liaison lorsque l'amplitude du déplacement relatif entre les deux armatures est supérieure à une valeur prédéterminée, caractérisée en ce que les moyens d'obturation comportent au moins une membrane élastique (166, 266, 366, 466a, 466b, 566) fixée à l'une de ses extrémités, disposée sensiblement perpendiculairement à la direction d'écoulement du liquide à l'intérieur du second conduit et qui est susceptible de se déformer, sous l'action du liquide, pour obturer au moins un orifice de passage de ce dernier.

2. Articulation selon la revendication 1, caractérisée en ce que la membrane élastique (166, 366) est disposée avec jeu dans une chambre intermédiaire (170, 370) formée à l'une des extrémités du second conduit (156, 356) à l'intérieur de laquelle elle est susceptible de se déformer pour venir obturer alternativement au moins un orifice de passage (162, 176-362a, 362b, 376) prévu dans chacune de deux parois (172, 174 - 372, 374) en vis-à-vis de la chambre intermédiaire.

3. Articulation selon la revendication 1, caractérisée en ce que les moyens d'obturation sont constitués par deux membranes élastiques (266a, 266b) s'étendant à l'intérieur du second conduit (256) et dont chacune est susceptible de se déformer alternativement pour venir coopérer avec une face en vis-à-vis (272, 274) d'un épaulement interne (282) du second conduit et y interrompre la circulation du liquide.

4. Articulation selon la revendication 2 caractérisée en ce que le second conduit est constitué de deux conduits (356a, 356b) reliant, en parallèle, les deux chambres (A, B) et qui débouchent par deux orifices de sortie (362a, 362b) dans une même face (374) de la chambre intermédiaire (370).

5. Articulation selon la revendication 1, caractérisée en ce que le second conduit est constitué de deux conduits (456a, 456b) reliant, en parallèle, les deux chambres (A, B) dans chacune desquelles ils débouchent par un orifice commun (462, 464) et en ce que les moyens d'obturation de chacun de ces orifices communs comportent une membrane élastique (466a, 466b) fixée à l'une de ses extrémités, disposée avec jeu en vis-à-vis de l'orifice commun et sensiblement perpendiculairement à la direction d'écoulement du liquide à travers cet orifice commun, et en ce que chacune des deux membranes est susceptible de se déformer alternativement pour venir obturer l'orifice commun en vis-à-vis.

6. Articulation selon la revendication 1, caractérisée en ce que la membrane élastique (566) est disposée, ave jeu, entre deux épaulements internes (588, 590) en vis-à-vis du second conduit (556) avec lesquels elle est susceptible de venir coopérer alternativement pour interrompre la circulation du liquide dans le second conduit.

7. Articulation selon l'une quelconque des revendications 1 à 6, caractérisée en ce que la, ou les, membrane élastique est, ou sont, réalisée en matériau élastomère.

8. Articulation élastique selon l'une quelconque des revendications précédentes, caractérisée en ce que le rapport de la longueur par le diamètre du premier conduit est supérieur au rapport de la longueur par le diamètre du second conduit.

9. Articulation élastique selon la revendication 8, caractérisée en ce que le premier conduit (148, 248, 348, 448, 548) a une longueur qui est environ 5 à 50 fois supérieure à son diamètre.

10. Articulation selon la revendication 8, caractérisée en ce que le second conduit (156, 256, 356, 456, 556) a une longueur qui est inférieure à environ 10 fois son diamètre.

11. Articulation selon l'une quelconque des revendications précédentes caractérisée en ce qu'elle est formée de deux pièces constituées chacune par une partie de l'armature intérieure et une partie de la masse en élastomère ménageant des alvéoles démoulables axialement, l'une des pièces comprenant en outre l'armature extérieure tandis que l'autre pièce comprend une armature secondaire, les armatures extérieure et secondaire étant serties l'une sur l'autre après serrage axial des deux pièces, et en ce que le second conduit de liaison entre les chambres, formées par les alvéoles, est ménagé entre les armatures secondaire et extérieure.

12. Articulation selon la revendication 1 prise en combinaison avec la revendication 11 caractérisée en ce que la, ou les, membrane est, ou sont, venue de matière avec la masse en élastomère.

**Claims**

1. An elastic joint of the type comprising an inner reinforcement (128, 228, 328, 428, 528) and an outer reinforcement (130, 230, 330, 430, 530) connected by a mass of elastomeric material (126, 226, 326, 426, 526 – 136, 236, 336, 436, 536) in which there are two chambers (A, B) filled with liquid and connected to each other by a first connecting duct (148, 248, 348, 448, 548) and a second connecting duct (156, 256, 356, 456, 556) and occluding means which make it possible to interrupt the flow of liquid into the second connecting duct when the magnitude of relative displacement between the two reinforcements is greater than a predetermined value, characterised in that the occluding means comprise at least one flexible membrane (166, 266, 366, 466a, 466b, 566) fixed at one of its ends, disposed substantially at right-angles to the direction of flow of liquid inside the second duct and adapted to undergo deformation, under the action of the liquid, in order to occlude at least one orifice of this latter.

2. A joint according to Claim 1, characterised in that the elastic diaphragm (166, 366) is disposed with clearance in an intermediate chamber (170, 370) formed at one of the ends of the second duct (156, 356) inside which it is capable of undergoing deformation in order alternately to occlude at least one orifice (162, 176–362a, 362b, 376) provided in each of two walls (172, 174–372, 374) opposite the intermediate chamber.

3. A joint according to Claim 1, characterised in that the occluding means consist of two flexible membranes (266a, 266b) which extend inside the second duct (256) and of which each is capable of undergoing deformation alternately in order to co-operate with an oppositely disposed face (272, 274) of an inner shoulder (282) of the second duct and of interrupting circulation of liquid therein.

4. A joint according to Claim 2, characterised in that the second duct consists of two ducts (356a, 356b) which in parallel connect the two chambers (A, B) and which discharge through two outlet orifices (362a, 362b) in one and the same face (374) of the intermediate chamber (370).

5. A joint according to Claim 1, characterised in that the second duct consists of two ducts (456a, 456b) which in parallel connect the two chambers (A, B) in each of which they discharge via a common orifice (462, 464) and in that the means of occluding each of these common orifices comprise a flexible membrane (466a, 466b) fixed at one of its ends and disposed with clearance in respect of the common orifice and substantially at right-angles to the direction of flow of liquid through this common orifice and in that each of the two membranes is capable of undergoing deformation alternately in order to occlude the common orifice which is opposite it.

6. A joint according to Claim 1, characterised in that the elastic membrane (566) is disposed with clearance between two inner shoulders (588, 590) opposite the second duct (556) with which it is capable of co-operating alternately in order to interrupt the circulation of liquid in the second duct.

7. A joint according to any one of Claims 1 to 6, characterised in that the elastic membrane or membranes is or are made from an elastomeric material.

8. A joint according to any one of the preceding Claims, characterised in that the ratio of length to the diameter of the first duct is greater than the ratio of the length to the diameter of the second duct.

9. An elastic joint according to Claim 8, characterised in that the first duct (148, 248, 348, 448, 548) is of a length which is about 5 to 50 times greater than its diameter.

10. A joint according to Claim 8, characterised in that the second duct (156, 256, 356, 456, 556) is of a length which is about 10 times less than its diameter.

11. A joint according to any one of the preceding Claims, characterised in that it consists of two pieces each comprising a part of the inner reinforcement and a part of the elastomeric mass which incorporates axially ejectable cells, one of the parts also comprising the outer reinforcement while the other part comprises a secondary reinforcement, the outer and secondary reinforcements being shrunk one onto the other after the two parts have been clamped axially, and in that the second connecting duct between the chambers, formed by the cells, is disposed between the secondary and outer reinforcements.

12. A joint according to Claim 1 taken in conjunction with Claim 11 characterised in that the membrane or membranes is or are in the same material as the elastomeric mass.

**Patentansprüche**

1. Elastische Gelenkverbindung einer Bauart, die einen Innenanker (128, 228, 328, 428, 528) und einen Aussenanker (130, 230, 330, 430, 530) aufweist, die durch eine Masse aus Elastomer (125, 226, 326, 426, 526–136, 236, 336, 436, 536) verbunden sind, in der zwei mit Flüssigkeit gefüllte Kammern (A, B) angebracht sind und zwischen sich durch eine erste Verbindungsleitung (148, 248, 348, 448, 548) und eine zweite Verbindungsleitung (156, 256, 356, 456, 556) verbunden werden, sowie Absperreinrichtungen, die es gestatten, die Umwälzung der Flüssigkeit in der zweiten Verbindungsleitung zu unterbrechen, wenn die Amplitude der Relativverschiebung zwischen den beiden Armaturen über einem vorgegebenen Wert liegt, dadurch gekennzeichnet, dass die Absperreinrichtungen mindestens eine elastische Membran (166, 266, 366, 466a, 466b, 566) umfassen, die an einer ihrer Enden befestigt ist, im wesentlichen senkrecht zur Strömungsrichtung der Flüssigkeit zum Inneren der zweiten Leitung angeordnet ist und sich unter Einwirkung der Flüssigkeit verformen kann, um mindestens eine Durchtrittsöffnung der letzteren abzusperren.

2. Gelenkverbindung nach Anspruch 1, dadurch gekennzeichnet, dass die elastische Membran (166, 366) mit Spiel in einer Zwischenkammer (170, 370) angeordnet ist, die an einem der Enden der zweiten Leitung (156, 356) angebracht ist, im Inneren derselben sie sich verformen kann, um abwechselnd mindestens eine Durchtrittsöffnung (162, 176–362a, 362b, 376) abzusperren, die in jeder der beiden Wände (172, 174–372, 374) vorgesehen ist, die der Zwischenkammer gegenüberliegen.

3. Gelenkverbindung nach Anspruch 1, dadurch gekennzeichnet, dass die Absperreinrichtungen durch zwei elastische Membranen (266a, 266b) gebildet werden, die sich im Inneren der zweiten Leitung (256) erstrecken und von denen sich jede abwechselnd verformen kann, um mit einer Seite (272, 274) gegenüber einer Innenschulter (282) der zweiten Leitung zusammenzuwirken und dort die Umwälzung der Flüssigkeit zu unterbrechen.

4. Gelenkverbindung nach Anspruch 2, dadurch gekennzeichnet, dass die zweite Leitung durch zwei Leitungen (356a, 356b) gebildet wird, die die beiden Kammern (A, B) parallel verbinden und die mittels zweier Austrittsöffnungen (362a, 362b) in die gleiche Seite (374) der Zwischenkammer (370) münden.

5. Gelenkverbindung nach Anspruch 1, dadurch gekennzeichnet, dass die zweite Leitung durch zwei Leitungen (456a, 456b) gebildet wird, die die beiden Kammern (A, B) parallel verbinden, in jede derselben sie über eine gemeinsame Öffnung (462, 464) münden, und dass die Absperreinrichtungen jeder dieser gemeinsamen Öffnungen eine elastische Membran (466a, 466b) aufweisen, die an einer ihrer Enden befestigt ist, die mit Spiel gegenüber der gemeinsamen Öffnung angebracht ist und im wesentlichen senkrecht zur Ausflussrichtung der Flüssigkeit durch diese gemeinsame Öffnung liegt, und dass jede dieser beiden Membranen sich abwechselnd verformen kann, um die gegenüberliegende gemeinsame Öffnung abzusperren.

6. Gelenkverbindung nach Anspruch 1, dadurch gekennzeichnet, dass die elastische Membran (566) mit Spiel zwischen zwei Innenschultern (588, 590) der zweiten Leitung (556) gegenüberliegend angeordnet ist und abwechselnd mit den Innenschultern zusammenwirken kann, um die Umwälzung der Flüssigkeit in der zweiten Leitung zu unterbrechen.

7. Gelenkverbindung nach einem der Ansprüche 1 bis 6, dadurch gekennzeichnet, dass die elastische Membran oder die elastischen Membranen aus elastomerem Werkstoff gefertigt ist oder sind.

8. Elastische Gelenkverbindung nach irgendeinem der vorausgehenden Ansprüche, dadurch gekennzeichnet, dass das Verhältnis der Länge zum Durchmesser der ersten Leitung grösser als das Verhältnis der Länge zum Durchmesser der zweiten Leitung ist.

9. Elastische Gelenkverbindung nach Anspruch 8, dadurch gekennzeichnet, dass die erste Leitung (148, 248, 348, 448, 548) eine Länge hat, die ungefähr 5 bis 50 mal grösser als ihr Durchmesser ist.

10. Gelenkverbindung nach Anspruch 8, dadurch gekennzeichnet, dass die zweite Leitung (156, 256, 356, 456, 556) eine Länge hat, die kleiner als ungefähr ihr 10facher Durchmesser ist.

11. Gelenkverbindung nach irgendeinem der vorausgehenden Ansprüche, dadurch gekennzeichnet, dass sie durch zwei Teile gebildet wird, die jeweils aus einem Teil des Innenankers und einem Teil der Elastomermasse bestehen, die axial entformbare Zellen bilden, der eine Teil ferner den Aussenanker umfasst, während der andere Teil einen sekundären Anker umfasst, der Aussenanker und der sekundäre Anker nach dem axialen Einpressen der beiden Teile aufeinandergebördelt werden, und die zweite Verbindungsleitung zwischen den Kammern, die durch die Zellen gebildet werden, zwischen dem sekundären Anker und dem Aussenanker angebracht wird.

12. Gelenkverbindung nach Anspruch 1 in Verbindung mit Anspruch 11, dadurch gekennzeichnet, dass die Membran oder die Membranen aus dem Werkstoff wie die Elastomermasse stammt oder stammen.

FIG.1

FIG.2

**FIG.3**

**FIG.4**

**FIG.5**

FIG.6

FIG.8

FIG.7

FIG.9

FIG.10

## FIG.11

## FIG.12

FIG.13

FIG.15

FIG.14